# EUROPEAN PATENT APPLICATION

(11) **EP 1 632 838 A2**
(43) Date of publication of application: **08.03.2006**
(21) Application number: 04020852.2
(22) Date of filing: 02.09.2004
(51) Int. Cl.: G06F 3/02, G06F 1/00

(54) **Secure personal identification entry system**

(71) Applicant: O2 Micro International Limited, Cayman Islands, British West Indies (KY)
(72) Inventor: Lee S., Patrick, Milpitas, CA 95053 (US); Sterling, Du, Palo Alto, CA 94123 (US); Oh Hyang-Kyun, Santa Clara, CA 95050 (US); Han Ching-Yung, Sunnyvale, CA 94087 (US)
(74) Representative: Jungen, Rolf

(57) **Abstract**

A secure personal identification entry system provides an integrated approach to secure identification data entry. A controller resides in a secure PIN smart card keyboard that also contains a numeric keypad and a smart card reader and allows the numeric keypad to server two purposes: the first as a normal keypad in a keyboard and the second as a secure PIN entry keypad. The user inserts his smart card, with his PIN number information stored in the smart card's memory, into the smart card reader. An application program running on a PC that requires secure identification from the user requests that the user enter his PIN number using the keypad on the keyboard. The controller receives the PIN request and switches the keypad from normal mode to PIN entry mode. The keypad is switched to be dedicated to PIN entry and communicates with the controller. The user enters his PIN number into the keypad. The controller receives the PIN number and forwards the PIN number to the smart card. The smart card validates the PIN number and sends a pass/fail indicator back to the controller. The controller forwards the pass/fail indication to the PC. Another preferred embodiment of the invention connects a biometric device to the keyboard from which the controller obtains a user's biometric identification information.

## Description

### BACKGROUND OF THE INVENTION

### TECHNICAL FIELD

The invention relates to the security in a computer environment. More particularly, the invention relates to receiving and verifying personal identification data in a secure environment separate from the requesting computer.

### DESCRIPTION OF THE PRIOR ART

The issue of computer security is becoming increasingly important in today's society. With the proliferation of personal computers, the number of hackers and identity thieves are dramatically rising. Identity theft has become the individual computer user's major concern and worst nightmare. Corporations worry about hackers breaking into the corporate intranet using methods such as impersonating an employee.

The main thrust in the area of secure personal identities is storing an individual's personal information in portable technologies so individuals can carry their identification with them wherever they go. Computers can be accessed using these portable technologies in a more secure manner than the traditional manual username and password entry.

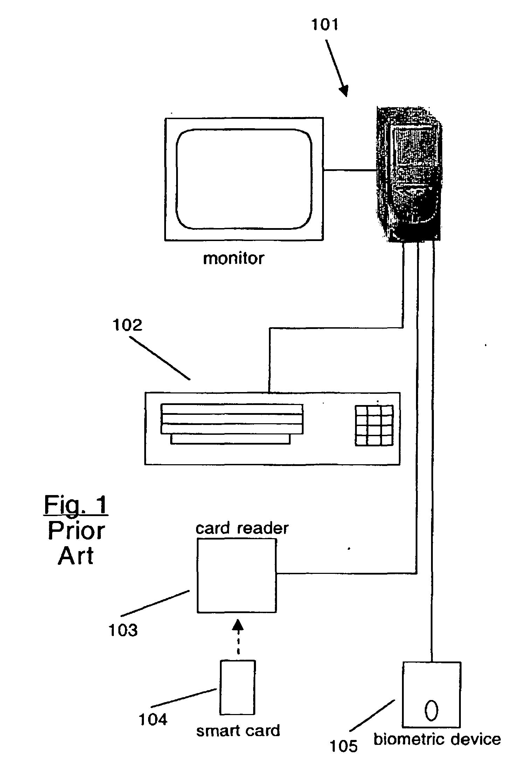

Referring to Fig. 1, one approach used to securely store an individual's personal information (*e.g.,* biometric information, PIN number, etc.) is via a smart card 104. A smart card contains a microprocessor and storage memory. An individual's personal information is stored in the smart card's memory that only the smart card's microprocessor can access. The smart card is inserted into a card reader 103 attached to the personal computer (PC) 101 being accessed. Information is communicated by the PC 101 to and from the smart card 104 through the card reader 103 using a standard communication protocol.

The PC 101 can use a biometric input device 105 to read the user's biometric pattern or the PC 101 can require the user to enter a PIN number through a keyboard 102 to verify his identity. The valid values for these types of data are stored in the smart card 104.

Once the user enters the required information through the keyboard 102 or the biometric device 105, the PC 101 delivers the entered information that it obtains from the information entry device to the smart card 104 depending on the type of information entry device that the PC is using. The smart card's 104 microprocessor compares the identification information with the information retrieved from stored in the smart card's 104 memory. If the entered identification information matches the identification information stored in the smart card's 104 memory, then the smart card 104 sends the PC. 101 a pass indicator. If the entered identification information does not match the identification information stored in the smart card's 104 memory, then the smart card 104 sends the PC 101 a fail indicator.

The problem with this approach is that any identification information entered into the input device is first sent to the PC 101. This poses a severe security risk because entered identification information residing on the PC 101 is susceptible to programs that can monitor such information. A monitoring program residing in the PC 101 or the network can watch the information flow between: the PC 101 and the smart card 104; the PC 101 and the keyboard 102; or the PC 101 and the biometric device 105, and know exactly what identification information is valid.

it would be advantageous to provide a secure personal identification entry system that provides a secure environment for the entry and verification of personal identification information . It would further be advantageous to provide a secure personal identification entry system that removes the requesting computer from the verification process.

### SUMMARY OF THE INVENTION

The invention provides a secure personal identification entry system. The system provides a secure environment for the entry and verification of personal identification information. In addition, the invention provides a system that removes the requesting computer from the verification process.

A preferred embodiment of the invention provides an integrated approach to secure identification data entry. A controller resides in a secure PIN smart card keyboard that also contains a numeric keypad and a smart card reader. The invention allows the numeric keypad to server two purposes: the first as a normal keypad in a keyboard and the second as a secure PIN entry keypad.

The user inserts his smart card into the smart card reader. The user's PIN number information is stored in the memory on the smart card: An application program running on a PC that requires secure identification from the user requests that the user enter his PIN number using the keypad on the keyboard.

The controller receives the PIN request and switches the keypad from normal mode to PIN entry mode and turns on a PIN entry mode indicator. The keypad is switched to be dedicated to PIN entry and communicates with the controller. The user enters his PIN number into the keypad. The controller receives the PIN number and forwards the PIN number to the smart card.

The smart card looks up the PIN number stored in its memory and validates the PIN number. If the PIN number is valid, the smart card sends a pass indication back to the controller. If the PIN number is not valid, the smart card sends a fail indication back to the controller.

The controller forwards the pass/fail indication to the requesting program running on the PC. The controller switches the keypad back to normal mode and turns off the PIN entry mode indicator.

Another preferred embodiment of the invention connects a biometric device to the keyboard. The user's biometric information is stored in the memory on the smart card.

When an application program running on the PC requests that the user enter his biometric information (*e.g*., retina scan, thumb print, etc.) using the biometric device, the controller receives the biometric request and triggers the biometric device to receive the biometric information from the user and turns on a PIN entry mode indicator. The controller receives the biometric information from the biometric device and forwards the biometric information to the smart card.

The smart card looks up the biometric information stored in its memory and validates the entered biometric information. A pass/fail indication is sent to the controller as described above and passed to the PC. The controller turns and turns off the PIN entry mode indicator.

Other aspects and advantages of the invention will become apparent from the following detailed description in combination with the accompanying drawings, illustrating, by way of example, the principles of the invention.

### BRIEF DESCRIPTION OF THE DRAWINGS

Fig**.** 1 is a block schematic diagram showing a prior art configuration of a computer using PIN entry and biometric devices according to the invention;
Fig. 2 is a block schematic diagram of a preferred embodiment of the invention residing in a keyboard using a keypad for secure PIN entry according to the invention;
Fig. 3 is a block schematic diagram of a preferred embodiment of the invention residing in a keyboard using a biometric device for secure identification information entry according to the invention;
Fig. 4 is a block schematic diagram showing the functional blocks of a preferred embodiment of the invention according to the invention; and
Fig. 5 is a block schematic diagram of a task viewpoint of a preferred embodiment of the invention according to the invention.

### DETAILED DESCRIPTION OF THE INVENTION

The invention is embodied in a secure personal identification entry system. A system according to the invention provides a secure environment for the entry and verification of personal identification information. In addition, the invention provides a system that removes the requesting computer from the verification process.

The invention provides a secure personal identification system that is separate from the requesting host computer. The invention is integrated into a keyboard input device that incorporates a smart card reader or other security input devices such as biometric devices. User identification information is entered and verified without any of the sensitive identification information entering the requesting host computer.

Personal computers (PC) typically require that security information, such as a usemame and password, be entered by a user before the PC allows the user access to its operations or other features such as ecommerce purchasing. PC security systems have just recently started to advanced to the point of using smart cards, dedicated PIN entry keypads, and biometric devices to identify valid users.

The problem with current secure computer access approaches is that sensitive personal identification information such as PIN numbers or biometric information (retina scan, thumbprints, etc.) are managed or processed by a host computer such as a PC.

Typically, the application program will request that a user enter in some type of identification information for the user to use the host computer or program. The host computer then receives identification information from an input device and performs some type of verification process.

Once sensitive identification information reaches the host computer, it becomes a security risk. For example, when a smart card is used to verify identification information, the identification information travels from the input device to the PC, then from the PC to the smart card. The identification information is easily monitored by programs running on the host computer or the network. A monitoring program can monitor data exchanges between the PC and the smart card. When a valid identification exchange occurs, the monitoring program can record the valid identification information for a hacker or identity thief.

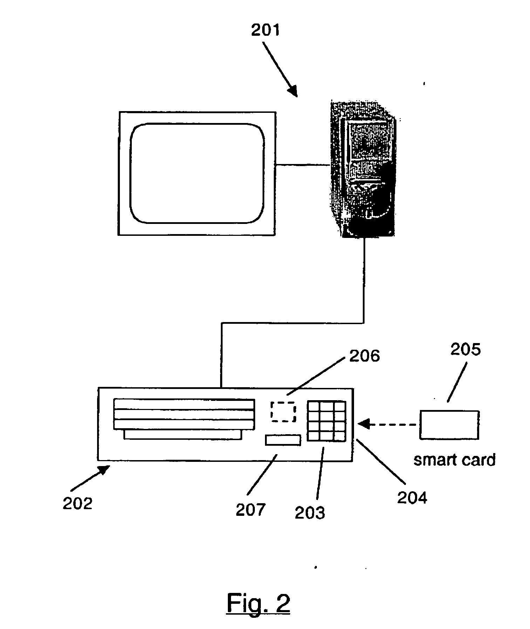

Referring to Fig. 2, a preferred embodiment of the invention provides an integrated approach to secure identification data entry. The invention's controller 206 resides in a secure PIN smart card keyboard 202 that also contains a numeric keypad 203 and a smart card reader 204. The invention allows the numeric keypad to server two purposes: the first as a normal keypad in a keyboard; and the second as a secure PIN entry keypad.

The user inserts his smart card 205 into the card reader 204 built into the keyboard 202. The smart card 205 contains a microprocessor and memory. The memory is only accessible by the microprocessor making data on the smart card 205 very secure. The user's PIN number information is stored in the memory on the smart card 205.

Application programs reside on the PC 201. An application program running on the PC 201 that requires secure identification from the user requests that the user enter his PIN number using the keypad 203 on the keyboard 202.

The controller 206 receives the PIN request and switches the keypad 203 from normal mode to PIN entry mode. The keypad 203 is logically (functionally) detached from communicating through the keyboard 202 to the PC 201 and is dedicated to PIN entry and communicates with the controller 206. A visual indicator such as an LED or LCD display 207 is optionally used by the controller 206 to indicate to the user that the system is in PIN entry mode. The user enters his PIN number into the keypad 203. The controller 206 receives the PIN number from the keypad 203 and forwards the PIN number to the smart card 205 in the card reader 204.

The smart card 205 looks up the PIN number stored in its memory and validates the PIN number. If the PIN number is valid, the smart card 205 sends a pass indication back to the controller 206. If the PIN number is not valid, the smart card 205 sends a fail indication back to the controller 206.

The controller 206 forwards the pass/fail indication to the requesting program running on the PC 201. The controller 206 switches the keypad 203 back to normal mode and the optional visual indicator 207 is changed to indicate that the user is no longer in PIN entry mode. This can be initiated by the controller 206 itself or by command from the PC 201. The controller 206 also has the ability to disable the keypad in case of repeated PIN entry failures or by request from the PC 201.

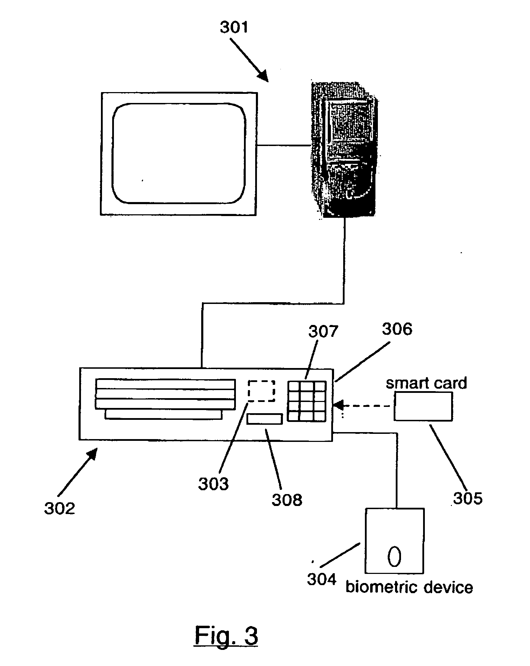

With respect to Fig. 3, another preferred embodiment of the invention provides a hub approach for secure identification data entry. The controller 303 resides in a keyboard 302 that also contains a smart card reader 305 and means such as a USB hub for connecting a biometric device 304 to the keyboard 302. The keypad 307 can also be controlled as described above.

The user inserts his smart card 305 into the card reader 306 built into the keyboard 302. The user's biometric information is stored in the memory on the smart card 305.

An application program running on the PC 301 that requires secure identification from the user requests that the user enter his biometric information (*e.g*., retina scan, thumb print, etc.) using the biometric device 304.

The controller 303 receives the biometric request and triggers the biometric device 304 to receive the biometric information from the user. A visual indicator such as an LED or LCD display 308 is optionally used by the controller 303 to indicate to the user that the biometric device is in data entry mode. The user enters his biometric information into the biometric device 304. The controller 303 receives the biometric information from the biometric device 304 and forwards the biometric information to the smart card 305 in the card reader 306.

The smart card 306 looks up the biometric information stored in its memory and validates the biometric information. If the biometric information is valid, the smart card 306 sends a pass indication back to the controller 303. If the biometric information is not valid, the smart card 306 sends a fail indication back to the controller 303. The controller 303 forwards the pass/fail indication to the requesting program running on the PC 301. The controller 303 changes the optional visual indicator 308 to indicate that the user is no longer in data entry mode.

In both Figs. 2 and 3, the identification information passes from the input device to the invention's controller and then to the smart card. The data path is very secure because the PC cannot see any data exchanged between the input device and the controller and, therefore, no programs on the PC or the network are able to monitor or sniff the sensitive data.

One skilled in the art will readily appreciate that the invention is easily applied to laptop computers and other devices that have the possibitity of rogue programs running in the background or in the network, sniffing for identification data.

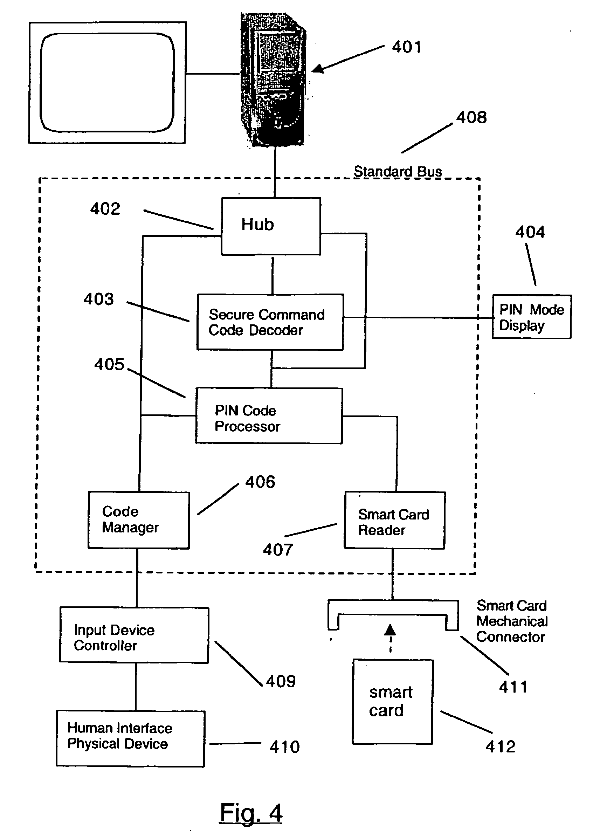

Referring to Fig. 4, there are three major blocks in the controller chip that perform the secure identity entry and validation functions:

### 1. Secure Command Decoder 403.

- Receives a Secure PIN Entry command from the PC 401 through the Hub 402.
- Decodes the Secure PIN Entry Command and sends the enable signals to initiate the Secure PIN Entry mode to the PIN Code Processor 405 and the Code Manager 406.
- Interfaces to the LED display 404 to indicate the activation of PIN entry mode.
- De-activates the PIN entry mode after a PIN validation status code is sent back to the PC 401.

### 2. PIN Code Processor 405.

- Temporarily stores the smart card ISO 7816 authenticate PIN command along with an empty PIN field received from the Secure PIN entry command.
- Receives PIN data from the Code Manager 406.
- Updates the PIN field in the authenticate PIN command according to the format specified in the PIN configuration data field of the Secure Pin Entry command and sends the command along with the PIN data to the smart card 412 for validation.
- Receives the status bytes SW1 and SW2 from the smart card 412 after the smart card 412 validates the PIN.
- Encapsulates the status bytes SW1 and SW2 with the reader response command and returns to them to PC 401 through Hub 402.
- Ends the Secure PIN mode after status bytes are returned to the PC 401.
- Ends the Secure PIN mode when it receives a <cancel> key from the Code Manager 406.

### 3. Code Manager 406.

In Secure PIN Mode:
- Receives key codes from the keyboard controller 409.
- Extracts the HID key codes from the packet received, and transmits the data to PIN Code Processor 405 after the user presses the <Enter> key.
- Accepts the exact number of keys pressed according to the PIN configuration data. Any additional key presses are ignored.
- Pressed keys are also sent upstream to the PC 401 through the Hub 402 in the USB keyboard data format (or other standardized peripheral communication format) with the data fields replaced with the "*" key for each pressed key.
- When the <cancel> key is pressed, the code of the <cancel> key is sent to the PIN Code Processor 405 so it will end the Secure PIN Entry mode.

In normal keyboard operation or when the Secure PIN Entry mode is disabled:
- All key presses are sent to the PC 401 through the Hub 402 just as a normal keyboard does.
- No data is transmitted to the PIN Code Processor 405.

When the PC 401 is turned on with a secure PIN smart card keyboard connected to its USB connector (or other standard connector and peripheral communication format), a Smart Card Resource Manager (PC/SC API Library) and a reader driver are loaded into the operating system (*e.g*., Windows XP).

The Smart Card Reader 407 powers the smart card 412 when the smart card 412 is inserted into the Smart Card Connector 411. The smart card 412 sends an ATR (Answer To Reset), which is the message sent by the smart card as the card has been activated (started up, turned on), to the Smart Card Reader 407 to start protocol negotiation. Once the protocol is set, the Smart Card Reader 407 enters the command state and waits for commands from the PC 401.

A typical scenario using an application program that requires a PIN entry occurs as follows:
a. Application software on the PC 410 starts the secure PIN process by asking the user to enter his PIN number or biometric information.
b. The PC 401 sends the secure PIN entry command to the Secure Command Decoder 403. The secure PIN entry command looks like:

| | | | |
|---|---|---|---|
| READER COMMAND | CARD AUTHENTICATE PIN COMMAND | EMPTY PIN FIELD | PIN CONFIGURATION DATA |

c. The secure PIN entry command is decoded by the Secure Command Decoder 403 which initiates the Secure PIN mode by sending enable signals to the PIN Code Processor 405 and the Code Manager 406. The Secure Command Decoder 403 also decodes the PIN configuration data from the secure PIN entry command.
d. The PIN mode LED 404 is lit to indicate that the Secure PIN mode is activated.
e . When the user enters his PIN through a keypad or biometric device 410, the Code Manager 406 extracts HID key codes from packets received from the input Device Controller 409 and transmits them to the PIN Code Processor 405 after the user presses the <Enter> key.
f. The Code Manager 406 only accepts the number of key presses as specified by the PIN configuration data.
g. The PIN Code Processor 405 encapsulates the authenticate PIN command along with the update PIN field according to the format specified in the PIN configuration data in the secure PIN entry command.
h. The PIN Code Processor 405 sends the PIN Command and PIN to the card:

| | |
|---|---|
| CARD AUTHENTICATE PIN COMMAND | PIN FIELD 00012345 |

i. The Code Manager 406 sends the key presses to the PC 401 through the Hub 402 in the USB keyboard data report format with the "*" key for all of the pressed keys, which is displayed on the PC's screen.
j. The smart card 412 returns StatusWord1 and StatusWord2 (SW1 and SW2) status bytes to the Smart Card Reader 407. The status bytes indicate the success or failure of the Authenticate command:

| | |
|---|---|
| SW1 | SW2 |

k. The Smart Card Reader 407 transmits the status bytes to the PIN Code Processor 405. The PIN Code Processor 405 encapsulates the status bytes with the reader respond command code and returns them to the host PC 401:

| | | |
|---|---|---|
| READER RESPOND COMMAND | SW1 | SW2 |

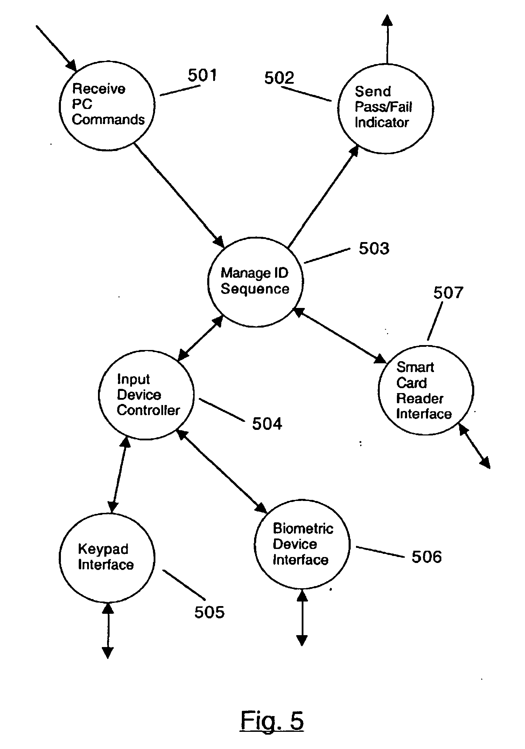

With respect to Fig. 5, a task viewpoint of the invention is shown. An application program running on a host PC sends a command to enter PIN entry mode to the Receive PC Commands module 501. The Receive PC Commands module 501 sends the command information to the Manage ID Sequence module 503.

The Manage ID Sequence module 503 notifies the Input Device Controller 504 to either prepare for a PIN number entry or a biometric information entry. For a PIN number entry, the Input Device Controller 504 sends a command to the Keypad Interface module 505 to place the keypad into PIN entry mode. The Keypad Interface module 505 switches the keypad from normal keyboard operation to dedicated PIN entry and lights or displays information on the PIN entry mode indicator to tell the user to start his PIN entry.

The user enters his PIN number into the keypad and the Keypad Interface module 505 sends the entered PIN to the Input Device Controller 504 when the user completes his PIN number entry. The Manage ID Sequence module 503 also notifies the Input Device Controller 504 to end the PIN number entry or biometric information entry. The Input Device Controller 504 sends a command to the Keypad Interface module 505 to switch the keypad back to normal keypad mode. The Keypad Interface module 505 also extinguishes or changes the display information on the PIN entry mode indicator to tell the user that he is no longer in PIN entry mode.

If the user does not enter any numbers into the keypad within a predetermined amount of time, then the Manage ID Sequence module 503 notifies the Input Device Controller 504 to end the PIN number entry or biometric information entry. The Input Device Controller 504 sends a command to the Keypad Interface module 505 to switch the keypad back to normal keypad mode. The Keypad Interface module 505 also extinguishes or changes the display information on the PIN entry mode indicator to tell the user that he is no longer in PIN entry mode.

For a biometric information entry, the Input Device Controller 504 sends a command to the Biometric Device Interface module 506 to start the user's biometric data entry. The Biometric Device Interface module 506 activates the biometric input device and waits for the user to complete his biometric data entry. The Keypad Interface module 505 lights or displays information on the PIN entry mode indicator to tell the user to start his biometric data entry. When the user has completed his data entry, the Biometric Device Interface module 506 sends the biometric information to the Input Device Controller 504. For ending a biometric input entry, the Input Device Controller 504 sends a command to the Biometric Device Interface module 506 to deactivate the biometric input device. The Keypad Interface module 505 then extinguishes or changes the display information on the PIN entry mode indicator to tell the user that he is no longer in biometric data entry mode.

The Input Device Controller 504 sends the PIN number or biometric information to the Manage ID Sequence module 503. The Manage ID Sequence module 503 packages the PIN number or biometric information and forwards it to the Smart Card Reader Interface module 507 for verification.

The Smart Card Reader Interface module 507 then sends the information to the smart card inserted into the smart card reader in the keyboard. The smart card microprocessor compares the identification information with the information that is stored in the smart card's memory. The smart card sends the Smart Card Reader Interface module 507 a pass or fail indicator depending on whether the identification comparison passed or failed.

Pass or fail information is sent by the Smart Card Reader Interface module 507 to the Manage ID Sequence module 503 which forwards the indicator to the Send Pass/Fail Indicator module 502. The Send Pass/Fail Indicator module 502 places the indicator in a communication packet and sends it to the PC.

The Manage ID Sequence module 503 can either keep the keypad locked into the PIN entry mode (or disabled) by command of the PC (in case of multiple verification failures) or by itself if the user fails to enter the correct identification information for a preset number of times and/or within a set amount of time. The Manage ID Sequence module 503 can also release the keypad back to normal keyboard use if the identification verification is successful or by command of the PC.

Although the invention is described herein with reference to the preferred embodiment, one skilled in the art will readily appreciate that other applications may be substituted for those set forth herein without departing from the spirit and scope of the present invention. Accordingly, the invention should only be limited by the Claims included below.

## Claims

1. A process for secure personal identification entry in a computer environment, comprising the steps of:
providing a security controller communicably connected to a keyboard;
wherein said keyboard comprises at least a numeric keypad and a smart card reader;
wherein said keyboard is communicably connected to a host computer;
receiving a secure information entry command from said host computer;
providing keypad control means on said security controller for switching said keypad to and from a normal keyboard operation to a dedicated PIN entry mode;
wherein said keypad control means switches said keypad to dedicated PIN entry mode upon receipt of said secure information entry command; and
wherein said security controller accepts a user's PIN entry through said keypad.

2. The process of Claim 1, further comprising the step of:
wherein the user inserts a smart card into said smart card reader;
wherein said smart card contains the user's secure PIN number;
sending said PIN entry to said smart card;
wherein said smart card compares said PIN entry with said secure PIN number;
wherein said smart card sends said security controller an indicator whether the comparison passed or failed; and
wherein said security controller sends said host computer said pass or fail indicator.

3. The process of Claim 1, wherein said security controller only accepts the number of key presses as specified by said host computer.

4. The process of Claim 1, wherein said keypad control means switches said keypad to normal keyboard operation after said pass or fail indicator is sent to said host computer.

5. The process of Claim 1, wherein said security controller sends an asterisk key code to said host computer for each key the user presses.

6. The process of Claim 1, further comprising the step of:
providing a PIN mode indicator; and
wherein said security controller activates said PIN mode indicator to indicate that said keypad is in PIN entry mode.

7. The process of Claim 6, wherein said security controller deactivates said PIN mode indicator upon exiting PIN entry mode.

8. The process of Claim 1, wherein said security controller resides within said keyboard.

9. The process of Claim 1, wherein said security controller keeps said keypad locked into said PIN entry mode by command of said host computer.

10. The process of Claim 1, wherein said security controller switches said keypad out of said PIN entry mode if the user fails to enter any number within a predetermined time period.

11. The process of Claim 1, further comprising the step of:
providing a communications hub within said keyboard; and
wherein communications between said host computer and said security controller pass through said communications hub.

12. A process for secure personal identification entry in a computer environment, comprising the steps of:
providing a security controller communicably connected to a keyboard;
wherein said keyboard comprises at least a smart card reader;
wherein said keyboard is communicably connected to a host computer;
receiving a secure information entry command from said host computer;
providing a biometric input device;
wherein said biometric input device is communicably connected to said security controller;
wherein said security controller activates said biometric device to accept a user's input upon receipt of said secure information entry command;
accepting a user's biometric data on said biometric device; and
wherein said security controller receives said biometric data from said biometric device.

13. The process of Claim 12, further comprising the step of:
wherein the user inserts a smart card into said smart card reader;
wherein said smart card contains the user's secure biometric information;
sending said biometric data to said smart card;
wherein said smart card compares said biometric data with said secure biometric information;
wherein said smart card sends said security controller an indicator whether the comparison passed or failed; and
wherein said security controller sends said host computer said pass or fail indicator.

14. The method of Claim 12, further comprising the step of:
providing a PIN mode indicator; and
wherein said security controller activates said PIN mode indicator to indicate that said biometric device is in entry mode.

15. The process of Claim 14, wherein said security controller deactivates said PIN mode indicator upon exiting entry mode.

16. The process of Claim 12, wherein said security controller resides within said keyboard.

17. The process of Claim 12, further comprising the step of:
providing a communications hub within said keyboard; and
wherein communications between said host computer and said security controller pass through said communications hub.

18. An apparatus for secure personal identification entry in a computer environment, comprising:
a security controller communicably connected to a keyboard;
wherein said keyboard comprises at least a numeric keypad and a smart card reader;
wherein said keyboard is communicably connected to a host computer;
a module for receiving a secure information entry command from said host computer;
keypad control means on said security controller for switching said keypad to and from a normal keyboard operation to a dedicated PIN entry mode;
wherein said keypad control means switches said keypad to dedicated PIN entry mode upon receipt of said secure information entry command; and
wherein said security controller accepts a user's PIN entry through said keypad.

19. The apparatus of Claim 18, further comprising:
wherein the user inserts a smart card into said smart card reader;
wherein said smart card contains the user's secure PIN number;
a module for sending said PIN entry to said smart card;
wherein said smart card compares said PIN entry with said secure PIN number;
wherein said smart card sends said security controller an indicator whether the comparison passed or failed; and
wherein said security controller sends said host computer said pass or fail indicator.

20. The apparatus of Claim 18, wherein said security controller only accepts the number of key presses as specified by said host computer.

21. The apparatus of Claim 18, wherein said keypad control means switches said keypad to normal keyboard operation after said pass or fail indicator is sent to said host computer.

22. The apparatus of Claim 18; wherein said security controller sends an asterisk key code to said host computer for each key the user presses.

23. The apparatus of Claim 18, further comprising:
a PIN mode indicator; and
wherein said security controller activates said PIN mode indicator to indicate that said keypad is in PIN entry mode.

24. The apparatus of Claim 23, wherein said security controller deactivates said PIN mode indicator upon exiting PIN entry mode.

25. The apparatus of Claim 18, wherein said security controller resides within said keyboard.

26. The apparatus of Claim 18, wherein said security controller keeps said keypad locked into said PIN entry mode by command of said host computer.

27. The apparatus of Claim 18, wherein said security controller switches said keypad out of said PIN entry mode if the user fails to enter any number within a predetermined time period.

28. The apparatus of Claim 18, further comprising:
a communications hub within said keyboard; and
wherein communications between said host computer and said security controller pass through said communications hub.

29. An apparatus for secure personal identification entry in a computer environment, comprising:
a security controller communicably connected to a keyboard;
wherein said keyboard comprises at least a smart card reader;
wherein said keyboard is communicably connected to a host computer,
a module for receiving a secure information entry command from said host computer;
a biometric input device;
wherein said biometric input device is communicably connected to said security controller;
wherein said security controller activates said biometric device to accept a user's input upon receipt of said secure information entry command;
a module for accepting a user's biometric data on said biometric device; and
wherein said security controller receives said biometric data from said biometric device.

30. The apparatus of Claim 29, further comprising:
wherein the user inserts a smart card into said smart card reader;
wherein said smart card contains the user's secure biometric information;
a module for sending said biometric data to said smart card;
wherein said smart card compares said biometric data with said secure, biometric information;
wherein said smart card sends said security controller an indicator whether the comparison passed or failed; and
wherein said security controller sends said host computer said pass or fail indicator.

31. The method of Claim 29, further comprising:
a PIN mode indicator; and
wherein said security controller activates said PIN mode indicator to indicate that said biometric device is in entry mode.

32. The apparatus of Claim 31, wherein said security controller deactivates said PIN mode indicator upon exiting entry mode.

33. The apparatus of Claim 29, wherein said security controller resides within said keyboard.

34. The apparatus of Claim 29, further comprising:
a communications hub within said keyboard; and
wherein communications between said host computer and said security controller pass through said communications hub.
